# EUROPEAN PATENT APPLICATION

(11) **EP 0 998 059 A1**
(43) Date of publication of application: **03.05.2000**
(21) Application number: 98308928.5
(22) Date of filing: 30.10.1998
(51) Int. Cl.: H04B 7/185

(54) **Mobile communication terminal with a removable data module for access to a first or second communication network**

(71) Applicant: ICO Services Ltd., London W6 9BN (GB)
(72) Inventor: Poisson, Lionel, Chiswick, London W4 1DD (GB)
(74) Representative: Musker, David Charles

(57) **Abstract**

A mobile communications terminal (2a) comprising a removable data module (35) (e.g. SIM card operating the SIM Toolkit protocols), and a processor (37) arranged to communicate therewith via an interface (33), the terminal (2a) being arranged for use with either a first communications network (4, 6) (e.g. a satellite network) or a second communications network (110) (e.g. a GSM terrestrial network), the terminal (2a) including data defining parameters (e.g. call forwarding, ring options, call barring) for use in communicating with at least one of said first or second communications network (4, 6; 110), in which the removable data module (35) stores first and second sets of preference data (356a, 356b) corresponding respectively to said first and second communications networks (4, 6; 110), and the terminal is arranged to select one of said sets of preference data (356a, 356b) and to operate in accordance therewith, in dependence upon the detected identity of the network with which it is in communication.

## Description

This invention relates to a mobile communications terminal, such as a mobile phone, particularly but not exclusively a mobile phone for use with a satellite communications system.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow messaging and data communications in addition to voice communications. The communications in the basic GSM system are defined in recommendations 02.17 and 11.11, available from the European TelecommunicationsStandards Institute (ETSI).

In GSM, various data is stored on a removable chip card known as the Subscriber Information Module (SIM) held in the subscriber's mobile terminal. The SIM comprises a microprocessor, read only memory and random access memory, and communicates with the processor of the mobile terminal through a card reader.

The data includes lists of stored dial numbers, for example, as well as security data.

Modern phones also store a number of control data in the memory of the processor provided in the phone. For example, preferred ringing tones (where several are provided); volume settings for incoming call alerts; call barring to particular numbers or prefixes; local cell broadcast settings and so on may be stored.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Both the ICO™ and Iridium™ systems are modelled on GSM and share protocols therewith to the extent possible.

Although SIMs are exchangeable between different phones operating to the same standard (e.g. GSM) or to related standards (e.g. GSM and DCS1800), different phone manufacturers implement such user interface features differently. Thus, if the user changes SIM card to a different phone to upgrade, or to operate on a different standard, the preferred values of such features will be lost and will need to be reprogrammed into a new, and possibly different, menu structure and user interface.

"Dual mode" phones are now becoming available, which can operate on either of two different systems, for example GSM and DCS 1800. Further, it is contemplated that forthcoming mobile satellite phones will mainly be dual mode, so as to preferentially use the terrestrial networks where available, and rely on the satellite networks to fill in capacity.

In such phones, by necessity, some settings will be different for the satellite and terrestrial networks. Also, we have realised that some will be different by preference. For example, due to the different tariff structures, call barring may be more restrictive on the satellite network, to permit only emergency or high priority calls. Also, as the different networks may offer different services, settings such as call forwarding may be different, for example to divert to voice mail on a terrestrial cellular network (if available) but to divert to an office number when on the satellite service.

Thus, because of different tariffs, different behaviour or different service availability, a user may wish to set up different preferences for each of two or more networks with which he can communicate, as well as having some data (for example dialling lists) common to both.

However, many such phones may only allow one set of preference data to be defined, common to both modes. Further, even if this hurdle is overcome, when the user changes phone, all preference data is likely to be lost.

In the original GSM system, the intention was to allow the processor of the mobile terminal to interrogate the SIM, to request data, which the SIM would then return. Such data could, for example, be authentication data, stored messages or telephone numbers.

More recently, draft GSM technical specification 11.14, version 5.6.0 of December 1997 defines a phase 2+ upgrade to the SIM - mobile terminal interface. The upgrade adds what is referred to as the "SIM application tool kit". This "tool kit" is a set of procedures which can be used by applications (i.e. control programs) running on the processor of the SIM.

In particular, the SIM can initiate actions to be taken by the mobile terminal (such as causing the terminal to display text supplied by the SIM, or to send a short message, or to set up a voice call); downloading data to the SIM from a telecommunications network (using the short message service and cell broadcast mechanisms) and call control by the SIM (allowing the SIM to allow, bar or modify a call requested by the user through the mobile terminal).

GB 2292047 discloses a mobile terminal which stores different software for different networks. The SIM indicates which network is to be used and the terminal selects the appropriate software.

The present invention is intended to provide a user (or group of users) with a way of setting up preferences which maintains a profile (especially of different settings for multiple networks) on changing phone and/or network.

Accordingly, the present invention provides a mobile communications terminal comprising a removable data module and a control circuit arranged to communicate therewith via an interface, the terminal being arranged for use with either a first communications network or a second communications network, the terminal including data defining parameters for use in communicating with at least one of said first or second communications network, characterised in that the removable data module stores first and second sets of preference data corresponding respectively to said first and second communications networks, and the terminal is arranged to select one of said sets of preference data and to operate in accordance therewith, in dependence upon the detected identity of the network with which it is in communication.

In another aspect, the present invention provides a removable processor module for use in a such telephony terminal.

Other aspects and embodiments of the invention, with corresponding objects and advantages, will be apparent from the following description and claims. The invention will now be illustrated by way of example only, with reference to the accompanying drawings, in which:
Figure 1a is a block diagram showing schematically the elements of a first communications system in which the present invention may be used;
Figure 1b illustrates schematically the beams produced by a satellite in the embodiment of Figure 1;
Figures 2a & 2b are diagrams showing schematically the elements of mobile terminal equipment of the present invention;
Figure 3 is a diagram illustrating the structure of tables stored in a memory of the SIM card forming part of the terminal of Figure 2;
Figure 4 is a flow diagram showing the initial operation of an application running on the SIM of Figure 2 in a first embodiment;
Figure 5 is a flow diagram showing the subsequent operation in the first embodiment;
Figure 6 is a flow diagram corresponding to Figure 4 in a second embodiment;
Figure 7 is a flow diagram corresponding to Figure 5 in a second embodiment;
Figure 8 is a flow diagram showing the process of receiving preference data by the SIM; and
Figure 9 is a flow diagram showing the process of transmitting preference data by the SIM.

### GENERAL DESCRIPTION OF SYSTEM AND TERMINAL

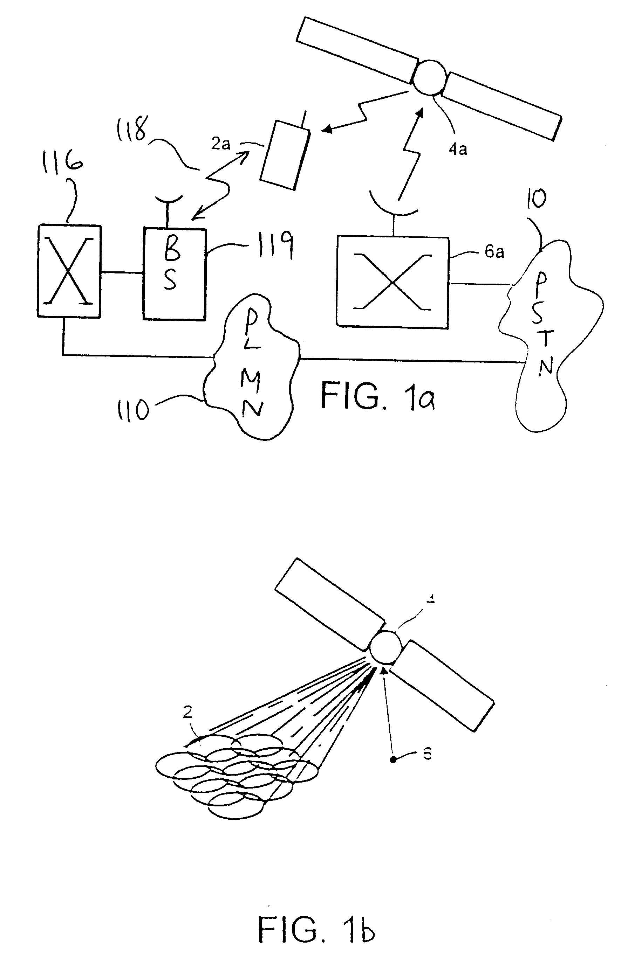

Referring to Figure 1a, a satellite communications comprises mobile user terminal equipment 2a (e.g. handsets); orbiting relay satellites 4a and satellite earth station nodes 6a connected to a terrestrial (e.g. public switched) telecommunications network 10.

A terrestrial public communications network (Public Land Telecommunications network or PLMN) 110 comprises mobile user terminal equipment 2a (e.g. handsets); at least one base station (BS) 119 and at least one Mobile Switching Centre (MSC) 116.

The handsets 2a may be dual mode handsets, as shown, in communication with both the satellite network and the PLMN. Additionally, single mode satellite handsets 2b (not shown) and terrestrial mobile handsets 2c (not shown) may be present, each communicating only with one of the networks.

As shown in Figure 1b, each satellite 4 is arranged to generate an array of beams covering a footprint beneath the satellite, each beam including a number of different frequency channels and time slots, as described in GB 2293725.

On each beam, the satellite therefore transmits a set of downlink frequencies. The downlink frequencies on adjacent beams are different, so as to permit frequency re-use between beams. Each beam therefore acts somewhat in the manner of a cell of a conventional terrestrial cellular system.

Additionally, the PLMN 110 comprises plural cells defined by respective base stations 119 (or antennas thereof). These PLMN cells are typically of smaller dimension than the satellite beam footprints. The PLMN may be a GSM network and the satellite network may be arranged to utilise GSM-like protocols where possible.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

The satellite Earth station nodes 6 are arranged for communication with the satellites 4 on a feeder link channel (typically a different frequency to the mobile link channels transmitted in the spot beams from the satellite to the user terminals). They comprise components of a conventional satellite Earth station consisting of least one satellite tacking antenna arranged to track at least one moving satellite 4; RF power amplifiers for broadcasting to the satellite and low noise amplifiers for receiving from the satellite on the feeder link channels; and a control unit for steering the antennas towards the satellite. Either in such an Earth station or elsewhere, a satellite control centre for controlling movements of the satellite may also be provided.

Further, each Earth station node 6 also comprises a mobile satellite switching centre, functionally generally equivalent to a GSM mobile switching centre (MSC), for routing calls between the feeder link and a dedicated network interconnecting the satellite earth station nodes 6, and connected to gateway stations. Additionally, each such satellite earth station node 6 is associated with a database store storing details of mobile terminals within communication range, like the visited location register (VLR) of a GSM MSC.

The gateway stations comprise mobile switching centres arranged to interconnect the PSTN 10 with the dedicated network of earth station nodes 6.

At least one home location register (HLR) database station is provided for storing details of users of the satellite system, and at least one network co-ordinating station is preferably provided, for co-ordinating the operation of the Earth station nodes 6.

Other components of the satellite network, PSTN 10 and PLMN 110 are well known in the art and need not be described further.

### Mobile terminal 2

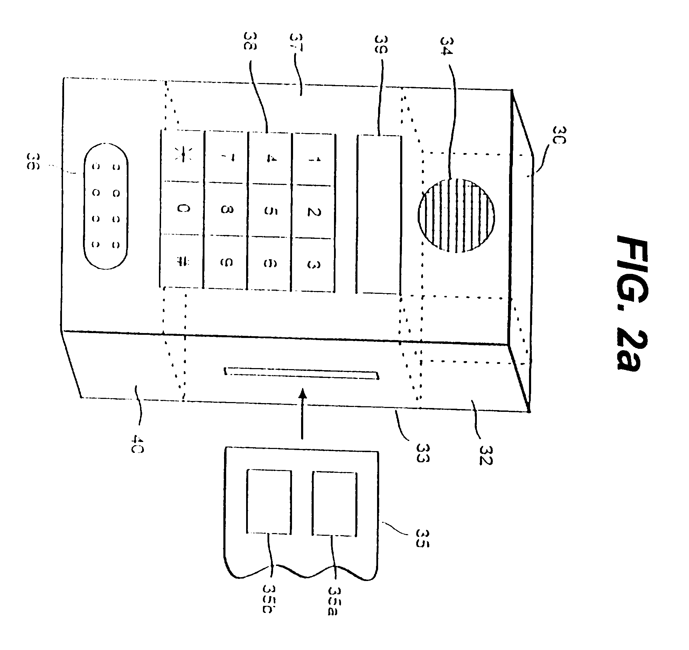

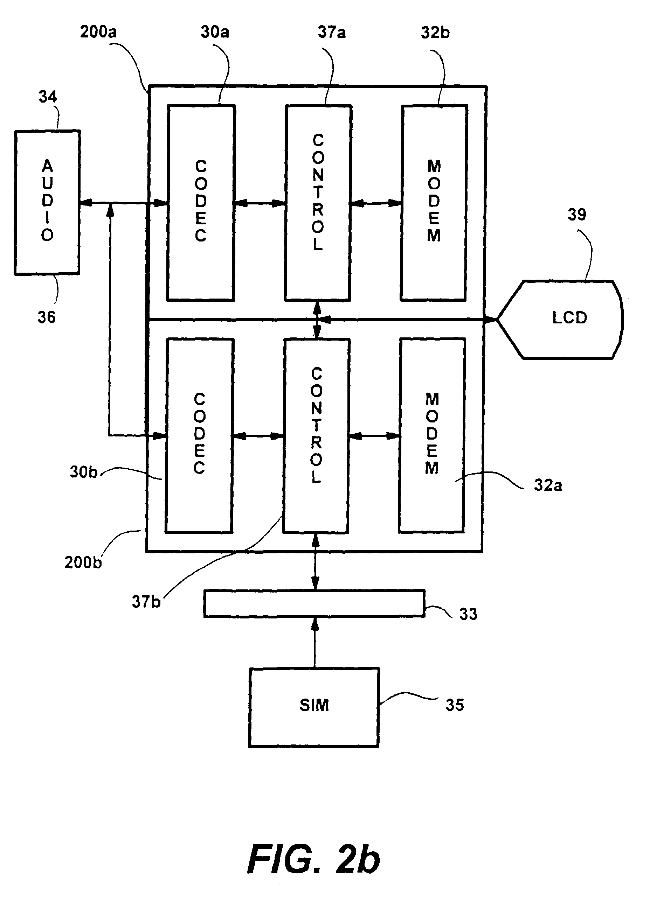

Referring to Figures 2a and 2b, a dual mode mobile terminal handset equipment 2a of Figure 1 is shown.

It comprises a combination of a satellite handset, similar to those presently available for use with the GSM system, and a terrestrial handset suitable for GSM communications.

The user interface components (microphone 36, loudspeaker 34, display 39 (for example a liquid crystal display) and keypad components 38) and power supply (battery 40) are shared, i.e. used in both modes.

Apart from such common components, the terminal comprises a GSM functional unit 200a and a satellite functional unit 200b. Each comprises a digital low rate coder/decoder 30a, 30b; modem 32a, 32b; control circuit 37a, 37b; radio frequency (RF) interface 32a and 32b, and antennas 31a and 31b, suitable for satellite and terrestrial GSM communications respectively.

A 'smart card' reader 33 receiving a smart card (subscriber identity module or SIM) 35 storing user information is also provided, connected to communicate with the satellite control circuit 37b. Specifically, the SIM 35 includes a processor 35a and permanent memory 35b.

The SIM 35 preferably complies with GSM Recommendations and/or Technical Specifications 02.17 ("Subscriber Identity Modules"), 11.11 and 11.14, and is preferably implemented as an industry standard "Smart Card" as described in International Standards ISO 7810, 7811 and 7816; these and GSM 02.17, 11.11 and 11.14 are all incorporated herein by reference.

The SIM memory 35b stores various subscriber identity and security data, including the International Mobile Subscriber Identity (IMSI). The manner of use of these is as described in the above-cited GSM specifications and papers.

Also, data (such as fixed dialling lists of dial numbers, and Short Messages) is stored in locations of the SIM 35 which may be interrogated by the processor 37b.

A suitable SIM can be developed using the SIMphonIC™ SIM Toolkit development system available from De La Rue Card Systems, UK, or the GemPlus GemXplore™ 98 and GemXplore™ CASE development systems available from GemPlus, or equivalent systems available from Siemens, Schlumberger, Giesecke und Devrient and others.

In this embodiment, the SIM 35 is not merely a passive information store, but contains a processor 35a which supports the SIM toolkit protocols. Accordingly, it operates under control of an operating system 352 and an application 354, both of which are stored in the memory 35b.

The operating system is arranged to communicate with the processor 37 of the terminal 2 using the SIM toolkit procedures defined in GSM recommendation 11.14, to pass data to and from the application 354. It may for example be the STARSIM operating system of Giesecke und Devrient, Munich, Germany, or that of one of the other suppliers identified above.

The control circuits 37a, 37b (in practice integrated with the respective coder 30) consist of a suitably programmed microprocessor, microcontroller or digital signal processor (DSP) chip. Each control circuit 37 performs various functions including framing speech and data into TDMA time frames for transmission (and likewise demultiplexing received TDMA frames); and performing encryption or enciphering.

Separate chipsets may be provided, each for implementing one of the terrestrial and satellite system functionalities 200a, 200b. Alternatively, a single processor may be programmed to perform the coding and control for both functionalities. In each case, separate RF components are provided, but user interface components are shared.

The embodiments described in GB 2319438 or GB2319437 (Applicant's ref. Idea 15) incorporated by reference herein, are preferably included.

The satellite coder/decoder (codec) 30a in this embodiment comprises a low bit rate coder 30a, generating a speech bit stream, together with a channel coder 30b applying error correcting encoding, to generate an encoded bit stream.

The terminal processor 37b is programmed to operate the GSM 11.14 interface, allowing it to be controlled by the SIM 35, and to pass data from and to the SIM 35. It may be based on an existing GSM terminal which can do so, for example the Siemens S10, the Alcatel One Touch Pro, the Motorola CD90 or CD930, or the Ericsson 688 or 888, together with a suitable Air Interface for satellite communications. It includes read/write non-volatile memory (such as Flash EEPROM) for storage of user data and preference settings such as volume settings.

Accordingly, the satellite processor 37b can interrogate the memory 35b of the SIM 35, and the SIM processor 35a can command the satellite processor 37b to execute commands defined in the SIM Toolkit, via the reader interface 33.

### FIRST EMBODIMENT

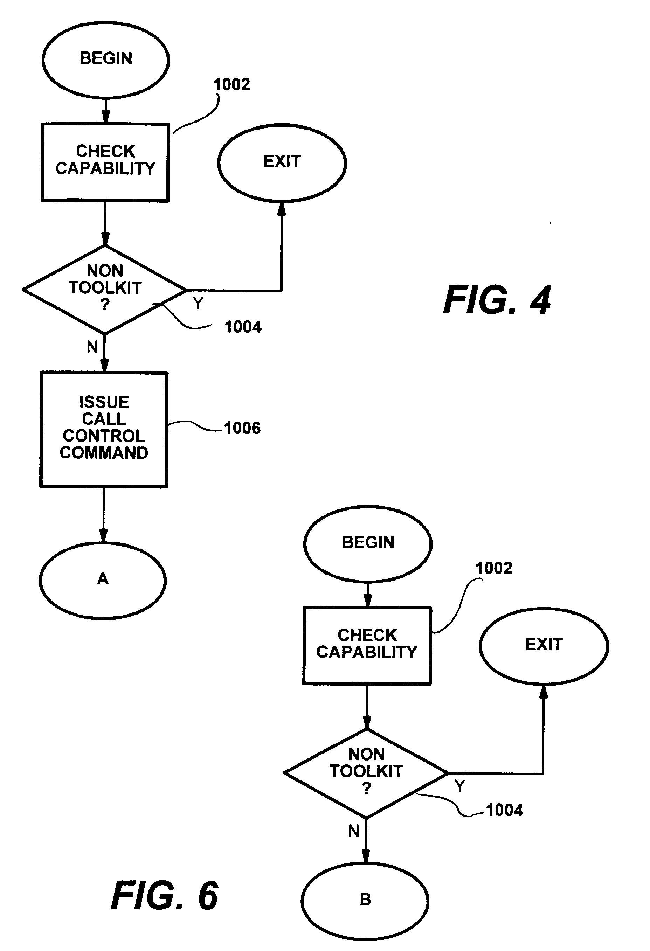

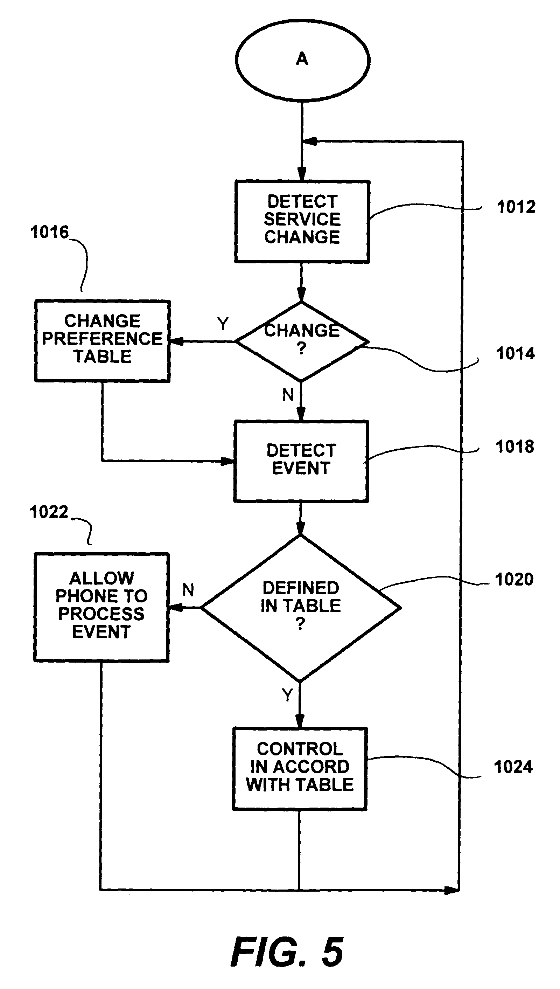

Referring to Figures 4 and 5, a first embodiment of the invention will now be described.

In this embodiment, for each service (e.g. network) with which the user can operate, the memory 35b of the SIM 35 stores a respective table 356. For a dual mode terminal which supports satellite and GSM networks, a first table 356a stores settings for the satellite network and a second table 356b stores settings for the GSM network.

The application 354 is arranged to read the tables (and may, as described below, be arranged to modify their contents).

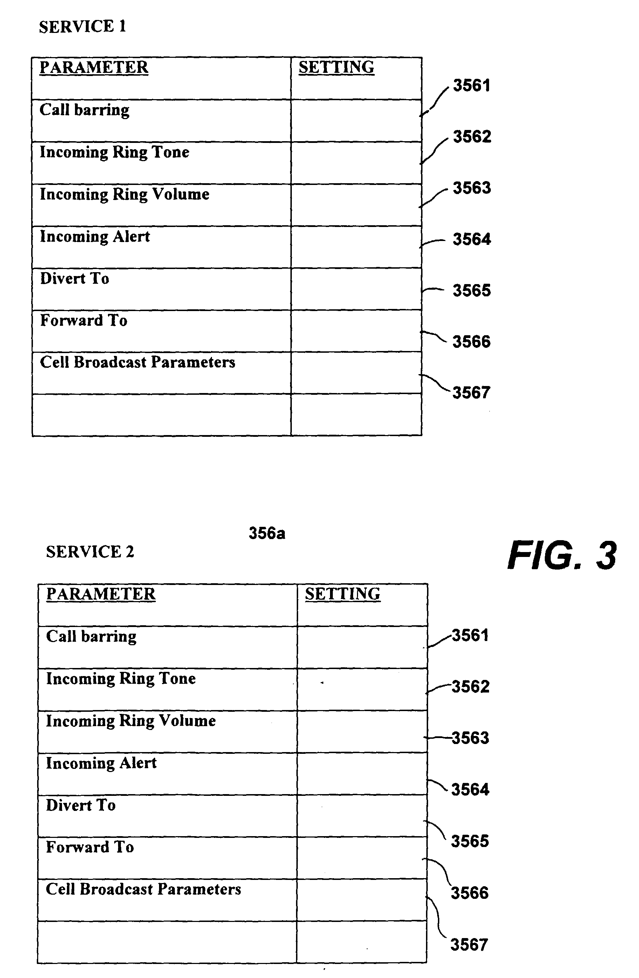

Referring to Figure 3, the table comprises a plurality of fields 3561, 3562, 3563, 3564, 3565, 3566, 3567... Each field stores one or more items of information for a respective terminal parameter setting.

In this embodiment, the field 3561 stores call barring data, indicating one or more dial prefixes or dial numbers which can be dialled without call barring. In this embodiment, the data stored in the field 3561 of the table 356a for the satellite service indicates that all calls other than those to one specific telephone number (corresponding to that of an office of the user) are to be barred, whereas the data in the corresponding field 3561 of the table 356b for the terrestrial network indicates that domestic calls are permitted but international calls (i.e. those beginning with the international dialling prefix) are barred.

The second field 3562 indicates the tone to be used for incoming rings, allowing a different tone to be used for incoming satellite calls as opposed to incoming terrestrial calls by storing a different code in the field 3562 of the satellite and terrestrial tables 356a, 356b. This enables the user to respond differently to a satellite call (for example, by remaining in an open area with the antenna fully raised to maximise the chances of reception).

Similarly, the fields 3563 and 3564 allow different incoming volumes setting for the satellite and terrestrial service (field 3563) and different alert modes (for example silent alerting or tone alerting) for incoming messages, with advantages similar to those described above in relation to field 3562.

The fields 3565 and 3566 store, respectively, data identifying the number or network address to which incoming calls should be diverted to or forwarded to when the terminal is busy. For example, in this embodiment the data in the call forwarding field 3566 may be set to an office telephone number, or the telephone number of an office voice mail system of the user, for satellite mode in the satellite table 356a, but the corresponding field 3566 may be set to the voice mail service provided by the terrestrial network in the table 356b of the terrestrial network service.

Finally, the field 3567 stores data for activating the particular cell broadcast services required by the user in each of the different services, in dependence upon their availability.

It will therefore be understood that the provision of separate storage of preferences for the first and second services (i.e. networks) allows, firstly, the terminal to be configured for the different services available on different networks (i.e. different cell broadcast contents) and, secondly, the action available to a user (such as a corporate user) to be handled differently in dependence upon the network to which he is connected. This second feature enables the use made of the more expensive satellite network to be relatively restricted compared to the use made of the cheaper (and, by the terminal, preferentially selected) terrestrial network 110.

Referring to Figures 4 and 5, the use made by the application 354 of the tables 356b will now be explained in greater detail.

On first insertion into a particular mobile terminal 2a, the application 354 assesses (step 1002) the capabilities of the terminal, in particular by sending the TERMINAL PROFILE DOWNLOAD command defined in GSM 11.14 Section 5. If (step 1004) no reply is received from the terminal processor 37b, it is assumed that the terminal cannot support the SIM toolkit routines and the application finishes execution. Thereafter, the SIM acts as a passive GSM SIM.

If a reply is received, the application 354 determines which of the SIM toolkit commands can be performed. In this embodiment, it is preferred that the dual mode satellite/terrestrial terminals should be capable of supporting all SIM toolkit commands.

It is also determined whether the terminal is single mode (i.e. terrestrial only) or dual mode (i.e. satellite and terrestrial).

Next, in step 1006, the SIM takes control of the activities of the phone by issuing the CALL CONTROL command described in Section 9 of GSM 11.14. As a result, any digit dialled by the user on the keyboard 38 will be passed directly to the application 354 by the phone for processing. Supplementary service data is also passed by the terminal processor 37b to the SIM processor 35, and received by the application 354.

In this state, therefore, the response of the terminal to outgoing or incoming calls or messages is determined by the application 354 rather than by the terminal processor 37.

Referring now to Figure 5, in this condition, in step 1012, the SIM application 354 repeatedly checks the identity of the network to which the terminal is connected (for example, by issuing the LOCATION INFORMATION command defined by Section 11.19 of GSM 11.14). The table 356 used by the application 354 is the table associated with the currently detected network. If (step 1014) the identity of the network has changed (for example, when terrestrial coverage has been lost but satellite coverage becomes available) then (step 1016) the table 356a corresponding to the new network is selected.

When (step 1018) an event is detected, such as the user initiating dialling, then (step 1020) the action is compared with the preference data stored in the table 356. If the action is one for which no preference data is defined (step 1020), then control is temporarily passed to the terminal processor 37b (step 1022) to allow it to process the event.

If, on the other hand, the event corresponds to one defined in the table 356 (such as an attempt to dial out), then the action defined by the table 356 is taken, by the application 354 issuing a pro-active SIM command to the terminal processor 37b. For example, for an outgoing call, the call is either barred (and a corresponding message is commanded to be displayed) or is caused to be dialled if the data stored in the field 3561 indicates that it is not a barred number.

Likewise, for an incoming call or message, the application 354 causes, at step 1024, the ringing or alerting of the user in accordance with the data stored in fields 3562-3564, using the PLAY TONE command defined in GSM 11.14 Section 6.4.5 for example.

Thus, in this embodiment, in general the application 354 initially assesses the capability of terminal to which it is connected; and then monitors the network to which it connected; and actively controls the response of the terminal to incoming or outgoing events using the preference data defined in the table for the relevant network to which it is currently connected.

### SECOND EMBODIMENT

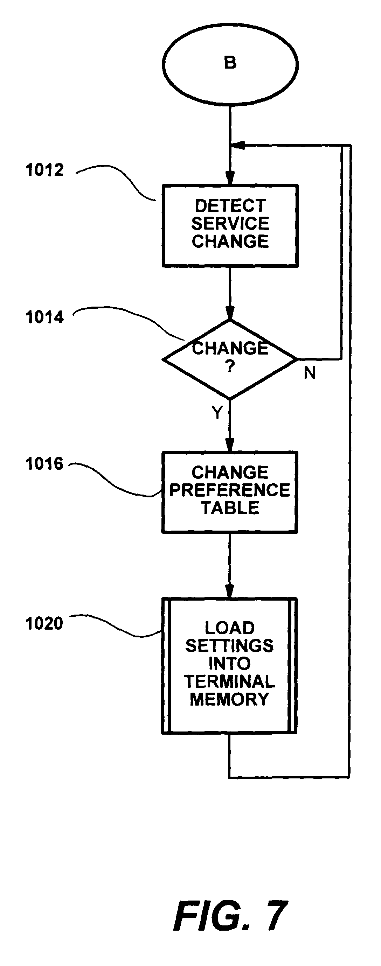

Referring to Figures 6 and 7, a second embodiment of the invention will now be disclosed. This embodiment uses similar preference tables 356 to those of the first embodiment.

Referring to Figure 6, the application 354 in this embodiment performs the same initial steps 1002, 1004 as in the first embodiment but does not then enter the call command mode.

Referring to Figure 7, as in the first mode, in steps 1012-1016 the network to which the terminal is connected is monitored by the application 354 and a corresponding preference table is selected. Then, on first acquisition of a new network, in step 1020, the settings of parameters of the terminal which are stored in the table 356 and which are also available within the memory of the phone are transmitted to the terminal processor 37b for storage in the memory of the terminal. For example, most terminals will have a memory location for storing the ring volume, ring tone and alert mode selected by the user. In this embodiment, values of these fields 3561-3564 and 3567 are accordingly read from the currently selected table 356 by the application 354 and supplied to the terminal processor 37b which is arranged, in response to the pro-active supply of such data with a predetermined command prefix, to load the data into its settings memory.

Thus, in the second embodiment, rather than pro-actively controlling the operation of the terminal 2a as disclosed in the first embodiment, the application 354 performs a reconfiguration of the settings stored within the terminal 2a on each change of network.

It will be apparent that the first and second embodiments could be combined. For example, where the initial assessment of the capabilities of the terminal in step 1012 indicates that certain of the settings in the memory of the terminal (for example the volume setting) can be changed by sending an initialisation command as in the second embodiment, then the process of the second embodiment is performed, to effect a one-off configuration of the terminal for those settings on each change of network. For any settings which cannot permanently be changed in the terminal by the method of the second embodiment, the first embodiment is performed continually.

### THIRD EMBODIMENT

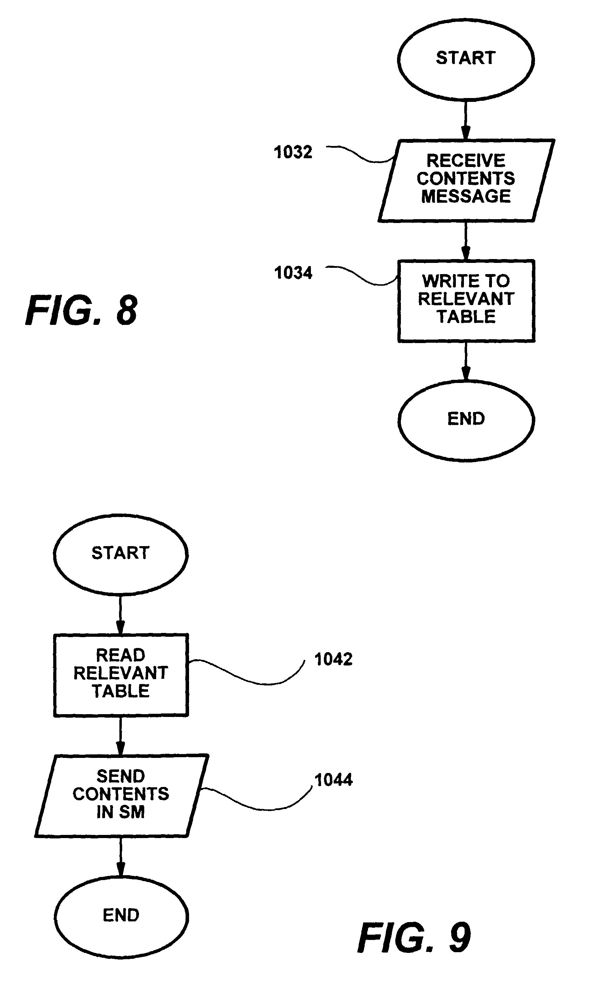

Referring to Figures 8 and 9, the operation of the third embodiment (which is preferably, but not necessarily, combined with the first or second embodiments) will now be disclosed.

In this embodiment, the application 354 is capable of two way communication with the network, by receiving data using the SMS-PP data download procedure and transmitting data using the MO short message control by SIM procedure, defined respectively in sections 7 and 10 of GSM 11.14.

Referring to Figure 8, in a step 1032, a SMS message is received, which is identified by the terminal processor 37b as being a data download message and is accordingly passed to the SIM 35, and specifically the application 354.

In step 1034, the application 354 (preferably after checking the authenticity of the message by use of, for example, a predetermined password) reads the data to be stored in one or more of the tables 356 from the message, and writes the corresponding data into the tables, overwriting the existing data therein.

Thus, using the process of Figure 8, the use made of one or more SIMs (for example by employees of a company) can be initially configured on issue of the SIMs, or reconfigured in the field.

Referring to Figure 9, the application 354 is arranged to be capable of transmitting the contents of the relevant table to the network to which it is currently connected (i.e. the table which corresponds to that network) in a short message. In a step 1042, the application 354 reads the data from the currently selected table, and in a step 1044, the values of the data are transmitted in a short message to a predetermined network address (which may itself be stored in the currently selected table 356).

Preferably, the process of Figure 9 is employed in either the first or the second embodiments, on detecting a change of network, to transmit the data for call forwarding and call diversion (stored in fields 3565 and 3566) to the network. On reception thereof at the MSC of the terrestrial network, or the Earth station node 6 of the satellite network (whichever the terminal is currently in communication with) the call control parameters (i.e. call forwarding and call divert parameters) are used to set up the switch software to execute the required divert or forwarding, in a manner well known in the art.

The process of Figure 9 may also be used to cause, periodically, the SIM 35 to report its current settings (for example, to determine whether they need updating or not).

In the above embodiments, by providing the extra functionality as an application (or part thereof) on an SIM card, and allowing the SIM card to control the operation of the terminal 2 using the tool kit routines, it is possible to make terminals which share some of the same components as GSM terminals. Thus, the cost of providing such terminals is reduced.

### OTHER MODIFICATIONS AND VARIANTS

The data described above are by no means exhaustive. For example, it will be clear that fixed dialling lists could be handled in the same manner, with the consequent possibility of using consistent fixed dialling lists for several different networks or additionally providing that the fixed dialling lists differ for different networks. In particular, the fixed dialling lists may consist of a first list of numbers which are used in both satellite and terrestrial mode, and an additional list of numbers available only in terrestrial mode.

It will be clear from the foregoing that the above described embodiment is merely one way of putting the invention into effect. Many other alternatives will be apparent to the skilled person and are within the scope of the present invention.

The numbers of satellites and satellite orbits indicated are purely exemplary. Smaller numbers of geostationary satellites, or satellites in higher altitude orbits, could be used; or larger numbers of low earth orbit (LEO) satellites could be used. Equally, different numbers of satellites in intermediate orbits.

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A mobile communications terminal (2a) comprising a removable data module (35) and a control circuit (37) arranged to communicate therewith via an interface (33), the terminal (2a) being arranged for use with either a first communications network (4, 6) or a second communications network (110), the terminal (2a) including data defining parameters for use in communicating with at least one of said first or second communications network (4, 6; 110), characterised in that the removable data module (35) stores first and second sets of preference data (356a, 356b) corresponding respectively to said first and second communications networks (4, 6; 110), and the terminal is arranged to select one of said sets of preference data (356a, 356b) and to operate in accordance therewith, in dependence upon the detected identity of the network with which it is in communication.

2. The terminal of claim 1, in which the removable data module (35) comprises a Subscriber Identity Module (SIM).

3. The terminal of claim 1 or claim 2, in which the removable data module (35) comprises a processor (35a) and a memory (35b).

4. The terminal of claim 3, in which the removable data module processor (35a) is arranged to execute an application program (354) to control the terminal to operate in accordance with one of said sets of preference data (356a, 356b).

5. The terminal of claim 4, in which said application program (354) is arranged to receive data indicating the identity of the network with which the terminal is in communication from said control circuit (37).

6. The terminal of claim 5, in which the application program (354) is arranged, when the terminal commences communications with a network, to supply corresponding preference data to the control circuit (37) for subsequent use thereby in communicating with that network.

7. The terminal of claim 5 or claim 6, in which the application program (354) is arranged, when the terminal commences communications with a network, to supply corresponding preference data to the control circuit (37) for transmission to a point (6) in said network for subsequent use by the network.

8. The terminal of claim 5, in which the application program (354) is arranged actively to control operation of the control circuit (37) communicating with a network in responding to events, in accordance with the preference data that corresponds to that network.

9. The terminal of any preceding claim, in which the removable data module (35) is arranged to receive said preference data via said control circuit from a network communicating with a network.

10. The terminal of any preceding claim, in which said second communications network (110) is a terrestrial mobile communications network.

11. The terminal of any preceding claim, in which said second communications network (110) conforms substantially to GSM.

12. The terminal of any preceding claim, in which the first communications network comprises a satellite link (4, 6).

13. A removable data module (35) for use in a terminal (2) according to any preceding claim.

14. A removable data module according to claim 13, which stores, and operates under the control of, an operating system (352) and an application (354).

15. A removable data module (35) according to claim 14, in which the operating system (352) is arranged to operate the SIM Toolkit procedures specified in GSM 11.14.
